# FASCICULE DE BREVET EUROPEEN

(11) **EP 1 751 443 B1**
(45) Date de publication et mention de la délivrance du brevet: **25.11.2009**
(21) Numéro de dépôt: 05776377.3
(22) Date de dépôt: 01.06.2005
(51) Int. Cl.: F16D 25/0638

(54) **MODULE DE TRANSMISSION POUR UN GROUPE MOTOPROPULSEUR NOTAMMENT POUR VEHICULES AUTOMOBILES**
GETRIEBEMODUL FÜR EINE MOTOR-GETRIEBEEINHEIT, IM BESONDEREN FÜR KRAFTFAHRZEUGE
TRANSMISSION MODULE FOR AN ENGINE-TRANSMISSION UNIT, ESPECIALLY FOR MOTOR VEHICLES

(30) Priorité: 03.06.2004 FR 0406027
(43) Date de publication de la demande: 14.02.2007
(73) Titulaire: PEUGEOT CITROËN AUTOMOBILES S.A., 78140 Vélizy Villacoublay (FR)
(72) Inventeur: COMBES, Emmanuel, F-91410 SAINT-CYR-SOUS-DOURDAN (FR); VICTOR, Jérôme, F-78500 Sartrouville (FR)
(86) Numéro de dépôt international: PCT/FR2005/050401
(87) Numéro de publication internationale: WO 2005/124175

(56) Documents cités:
- DE-A- 10 151 632
- US-A- 3 330 391
- US-B1- 6 557 687

## Description

La présente invention concerne un module de transmission pour un groupe motopropulseur, notamment pour un véhicule automobile.

L'invention concerne également un groupe motopropulseur équipé d'un tel module de transmission.

De façon classique, les modules de transmission comprennent un arbre d'entrée de mouvement relié au vilebrequin d'un groupe motopropulseur, un arbre de sortie de mouvement relié à une boîte de vitesses et un embrayage de liaison entre les deux arbres.

L'embrayage remplit les fonctions d'accouplement, de désaccouplement, de gestion d'un glissement et de limitation du couple transmis.

On connaît des embrayages de type "sec" qui se composent d'une part, d'un plateau muni à sa périphérie d'une garniture de friction et solidaire de l'arbre d'entrée et, d'autre part, d'une mâchoire comportant une partie fixe solidaire de l'arbre de sortie et une partie mobile axialement commandée par une pédale d'embrayage. Le pincement du plateau entre les deux parties de la mâchoire assure par friction la transmission du couple.

Ce genre d'embrayage couramment utilisé sur les véhicules automobiles a pour inconvénient qu'il est encombrant et qu'il présente un poids assez élevé.

On connaît également des embrayages de type "humide" qui se composent de plusieurs disques déplaçables en translation axiale et alternativement lisses et revêtus d'une garniture de friction, le frottement entre ces disques assurant la transmission du couple entre l'arbre d'entrée et l'arbre de sortie. Les fonctions d'accouplement, de désaccouplement, de gestion du glissement et de limitation du couple transmis sont réalisées en milieu lubrifié, soit dans un bain ou dans un brouillard d'huile, soit par barbotage d'huile.

La commande se fait en exerçant une pression axiale sur les disques par l'intermédiaire d'un plateau tournant et déplaçable en translation. Dans les transmissions de véhicules automobiles et les différentiels, le déplacement axial de ce plateau ne peut, généralement, être réalisé directement par des moyens mécaniques depuis l'extérieur du module du fait de l'encombrement et du nombre de pièces tournantes à traverser.

C'est pour cela que la commande du déplacement du plateau est effectuée au moyen d'un fluide sous pression. Mais, le circuit du fluide depuis l'actionneur externe jusqu'au plateau est le plus souvent complexe et il doit traverser des pièces tournantes pourvues d'orifices. Parfois, un piston tournant distinct du plateau fournit l'effort sur ce dernier par le biais d'une entretoise elle-même tournante. Ces embrayages sont le plus souvent des embrayages naturellement "ouverts", c'est à dire naturellement en position débrayée.

De ce fait, avec ce type d'embrayage, la consommation d'énergie utilisée pour la commande de l'embrayage est beaucoup plus importante si, sur la durée de vie d'un véhicule automobile, la proportion de temps de la position embrayée de cet embrayage est beaucoup plus importante que la proportion de temps en position débrayée dudit embrayage.

L'invention a pour but de proposer un module de transmission pour un groupe motopropulseur qui évite les inconvénients précédemment mentionnés.

L'invention a donc pour objet un module de transmission pour un groupe motopropulseur, notamment pour véhicules automobiles, du type comprenant un arbre d'entrée de mouvements destiné à être relié à un moteur thermique, un arbre de sortie de mouvements destiné à être relié à une boîte de vitesses et un embrayage de liaison entre les deux arbres, **caractérisé en ce qu'**il comprend un carter autonome comportant une première demi-coquille supportant à rotation l'arbre d'entrée et une seconde demi-coquille supportant à rotation l'arbre de sortie coaxial audit arbre d'entrée et en ce que les deux demi-coquilles forment un logement étanche contenant l'embrayage naturellement en position embrayée, un organe mécanique de maintien de l'embrayage en position embrayée, par l'intermédiaire d'un piston en forme de disque, un circuit hydraulique de commande en position débrayée de cet embrayage en agissant directement sur ledit piston à l'encontre dudit organe mécanique et un circuit hydraulique de lubrification et de refroidissement dudit embrayage.

Selon d'autres caractéristiques de l'invention :
- la première demi-coquille comporte un fourreau central muni d'un alésage axial de passage de l'arbre d'entrée,
- la seconde demi-coquille comporte un fourreau central muni d'un alésage axial de passage de l'arbre de sortie,
- l'embrayage comporte une première série de disques portés par un plateau solidaire de l'arbre d'entrée et une seconde série de disques disposés entre les disques de la première série et portés par un plateau solidaire de l'arbre de sortie, lesdits disques étant déplaçables en translation axiale et rappelés les uns vers les autres sous l'action de l'organe mécanique de maintien de l'embrayage en position embrayée,
- l'organe mécanique de maintien de l'embrayage en position embrayée comprend au moins un élément élastique interposé entre une pièce fixe en translation portée par un manchon concentrique au fourreau de la seconde demi-coquille et le piston monté coulissant sur ledit manchon et agissant sur ladite première série de disques,
- le circuit hydraulique de commande comprend un canal longitudinal ménagé dans le fourreau de la seconde demi-coquille et comportant une entrée reliée à une alimentation en fluide sous pression et une sortie débouchant dans une chambre formée par le piston et un disque fixe en translation porté par le manchon de l'autre côté dudit piston par rapport à ladite pièce, ledit fluide sous pression exerçant une force sur le piston à l'encontre de la force exercée par l'élément élastique,
- ledit élément élastique est formé par exemple par au moins un ressort hélicoïdal ou au moins une rondelle élastique ou un diaphragme.
- le circuit hydraulique de lubrification et de refroidissement comprend un canal longitudinal ménagé dans le fourreau de la seconde demi-coquille et comportant une entrée reliée à une alimentation en fluide sous pression et une sortie débouchant dans un espace formé entre le piston et le plateau solidaire de l'arbre de sortie,
- le canal longitudinal est relié, par un perçage transversal, à un passage axial ménagé dans l'arbre et communiquant, d'une part, avec un espace formé entre les deux plateaux et, d'autre part, avec un passage axial ménagé dans l'arbre d'entrée et communiquant, par un perçage transversal, avec un espace formé entre les deux demi-coquilles, la pièce fixe en translation et le plateau solidaire dudit arbre d'entrée.

L'invention a également pour objet un groupe motopropulseur, notamment pour véhicules automobiles, **caractérisé en ce qu**'il comprend un module de transmission tel que précédemment mentionné.

L'invention sera mieux comprise à la lecture de la description qui va suivre, donnée à titre d'exemple et faite en se référant au dessin unique annexé qui est une vue schématique en coupe axiale d'un module de transmission pour un groupe motopropulseur, notamment pour véhicules automobiles.

Sur la figure, on a représenté un module de transmission désigné dans son ensemble par la référence 10 et qui comprend un arbre d'entrée de mouvement 11 destiné à être relié à un moteur thermique 1, un arbre de sortie de mouvement 12 destiné à être relié à une boîte de vitesse 2 et un embrayage de liaison entre les deux arbres 11 et 12 et désigné par la référence générale 30.

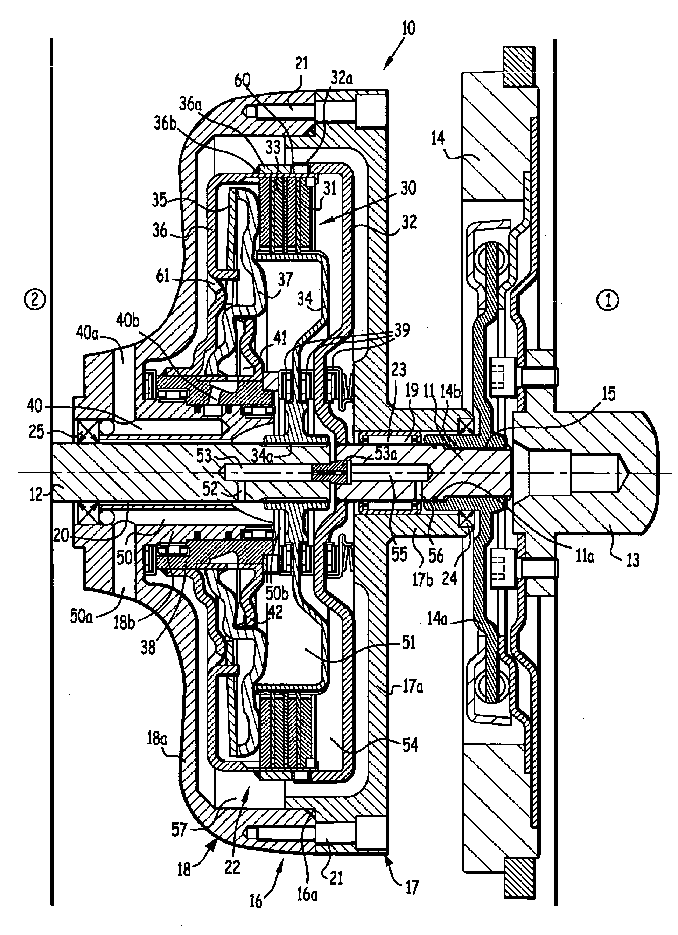

De manière classique, l'arbre d'entrée 11 est solidaire en rotation du vilebrequin du moteur thermique 1, dont une partie, ou "nez" est représentée à la figure 1 sous la référence 13. Le vilebrequin 13 est muni d'un volant d'inertie 14, et relié à l'arbre d'entrée 11 par l'intermédiaire d'un dispositif amortisseur 14a solidaire en rotation dudit arbre d'entrée 11 par des cannelures 15.

Le module de transmission 10 comprend un carter autonome 16 comportant une première demi-coquille 17 supportant à rotation l'arbre d'entrée 11 et une seconde demi-coquille 18 supportant à rotation l'arbre de sortie 12.

Les arbres 11 et 12 sont coaxiaux. La première demi-coquille 17 est formée par un voile 17a muni d'un fourreau central 17b comportant un alésage axial 19 de passage de l'arbre d'entrée 11 et la seconde demi-coquille 18 est formée par un voile 18a muni d'un fourreau central 18b comportant un alésage axial 20 de passage de l'arbre de sortie 12.

Les deux demi-coquilles 17 et 18 sont solidarisées entre elles, au niveau de leurs bords périphériques, par des organes de liaison 21 constitués par exemple par des vis.

Dans le fourreau 17b de la première demi-coquille 17 est monté un organe de roulement 23 et ce fourreau 17b est pourvu d'un joint d'étanchéité 24 qui prend appui sur un prolongement 14b du dispositif amortisseur 14a. De même, le fourreau 18b est pourvu d'un joint d'étanchéité 25 qui prend appui sur l'arbre de sortie 12. Un joint d'étanchéité 11 a est monté sur l'arbre d'entrée 11 au niveau du prolongement 14b du dispositif amortisseur 14a et un joint d'étanchéité 16a est interposé entre les deux demi-coquilles 17 et 18. Ainsi, ces deux demi-coquilles 17 et 18 définissent un logement étanche 22 contenant l'embrayage 30.

L'arbre d'entrée 11 est solidaire en rotation avec un plateau 32 qui est lui-même solidaire en rotation avec une pièce 36 fixe en translation portée par un manchon 38 concentrique au fourneau 18b de la seconde demi-coquille 18. A cet effet, le plateau 32 est lié en rotation à une couronne 36a par l'intermédiaire de dents axiales complémentaires 32a mutuellement en prise et formées respectivement sur une partie périphérique du plateau 32 et sur une partie périphérique de la couronne 36a et cette couronne 36a est liée en rotation à la pièce 36 par un cordon de soudure 36b.

L'embrayage 30 comporte une première série de disques 31 portés par la pièce 36 solidaire en rotation de l'arbre d'entrée 11 et une seconde série de disques 33 disposés entre les disques 31 et portés par un plateau 34 solidaire en rotation à l'arbre de sortie 12 par l'intermédiaire de cannelures 34a.

Les disques 31 et 33 sont déplaçables en translation axiale le long de cannelures ménagées sur le plateau 34 et sur la pièce 36 et ils sont rappelés les uns vers les autres sous l'action d'un organe mécanique de maintien 35 également placé dans le logement 22. Cet organe mécanique 35 est formé par au moins un élément élastique interposé entre la pièce 36 et un piston 37 en forme de disque et monté coulissant sur ledit manchon 38. Ainsi que montré sur la figure, le piston 37 prend appui, à sa partie supérieure, sur la première série de disques 31 de l'embrayage 30. L'élément élastique 35 est formé par exemple par au moins un ressort hélicoïdal ou au moins une rondelle élastique ou un diaphragme.

De préférence, l'élément élastique 35 est constitué par une rondelle élastique de type "Belleville" qui présente l'avantage de générer un effort élevé sur un faible déplacement pour un encombrement axial réduit. Enfin, ce type de rondelle présente une bonne courbe d'effort en fonction de son déplacement pour une durée de vie élevée.

Ainsi, le piston 37 maintien les disques 31 et 33 de l'embrayage 30 serrés les uns contre les autres sous l'action de l'élément élastique 35 qui prend appui sur la pièce 36. De ce fait, l'embrayage 30 est un embrayage de type naturellement fermé, c'est à dire qu'il est maintenu en position embrayée par l'élément élastique 35. L'élément élastique 35 est bloqué en rotation par la pièce 36.

Les plateaux 32 et 34 sont maintenus en position écartée l'un de l'autre et entre le voile 17a de la première demi-coquille 17 et l'extrémité du manchon 38 par des organes de butée 39.

Le module de transmission 10 comprend également un circuit hydraulique de commande du déplacement du piston 37 à l'encontre de la force de maintien de l'élément élastique 35 pour amener l'embrayage 30 en position débrayée, c'est à dire dans laquelle les disques 31 et 33 ne sont plus appliqués les uns contre les autres.

Ce circuit hydraulique de commande comprend un canal longitudinal 40 ménagé dans le fourreau 18b de la seconde demi-coquille 18 et qui comporte une entrée 40a reliée à une alimentation en fluide sous pression, non représentée, et une sortie 40b débouchant dans une chambre 41. Cette chambre 41 est délimitée par la partie inférieure du piston 37 et un disque 42 fixe en translation porté par le manchon 38 et disposé de l'autre côté dudit piston 37 par rapport à la pièce 36.

L'embrayage 30 est un embrayage de type humide et pour cela, le module de transmission 10 comporte aussi un circuit hydraulique de lubrification et de refroidissement qui comprend un canal longitudinal 50 ménagé dans le fourreau 18b de la seconde demi-coquille 18 et s'étendant parallèlement au canal longitudinal 40.

Le canal longitudinal 50 comporte une entrée 50a reliée à une alimentation en fluide sous pression, non représentée, et une sortie 50b débouchant dans l'espace 51 entre le piston 37 et le plateau 34 solidaire de l'arbre de sortie 12.

Par ailleurs, le canal longitudinal 50 est en communication par un perçage transversal 52 ménagé dans l'arbre de sortie 12 avec un passage axial 53 ménagé dans ledit arbre de sortie 12. Ce passage axial 53 débouche à l'extrémité libre de l'arbre de sortie 12 et, de ce fait, communique, d'une part avec un espace 54 formé entre les deux plateaux 32 et 34 et, d'autre part, avec un passage axial 55 ménagé dans l'arbre d'entrée 11 par l'intermédiaire d'un ajutage 53a permettant de régler le débit de fluide. Le passage axial 55 communique, par l'intermédiaire d'un perçage transversal 56 ménagé dans l'arbre d'entrée 11, avec un espace 57 formé entre les deux demi-coquilles 17 et 18, la pièce 36 et le plateau 32 solidaire de l'arbre d'entrée 11.

Le module de transmission 10 fonctionne de la manière suivante.

L'élément élastique 35 assure le plaquage du piston 37 contre les disques 31 et 33 de l'embrayage 30, maintenant ainsi cet embrayage 30 normalement fermé dans sa position naturelle, c'est à dire en position embrayée.

Lorsque le fluide sous pression débouche dans la chambre 41 en passant par le canal longitudinal 40, cette pression hydraulique agit directement sur le piston 37 provoquant, de ce fait un effort, contraire à l'élément élastique 35. La résultante des efforts de pression hydraulique et de l'élément élastique 35 donne l'effort voulu sur le piston 37 et sur les disques 31 et 33 de l'embrayage 30.

En position embrayée de l'embrayage 30, l'ensemble des pièces constitué par l'arbre d'entrée 11, le plateau 32, les disques 31 et 33, le plateau 34, le piston 37, l'élément élastique 35, la pièce 36 et l'arbre de sortie 12 tourne autour de l'axe longitudinal formé par les arbres 11 et 12.

Le fluide sous pression de lubrification et de refroidissement est injecté dans l'espace 51 en passant par le canal longitudinal 50, dans l'espace 54 en passant par ce même canal 50, puis par le perçage transversal 52 et le passage axial 53 et enfin dans l'espace 57 en passant par ces canaux 50, 52 et 53, puis par le passage axial 55 et le perçage transversal 56. Ainsi, l'embrayage 30 est refroidie ce qui permet un fonctionnement des disques 31 et 33 de cet embrayage 30 dans un fluide caloporteur pour dissiper l'énergie pendant les phases de glissement. Ce fluide assure également la lubrification des organes de roulement 23 et de butée 39.

En fonctionnement du module de transmission 10, il se crée une centrifugation du fluide de lubrification et de refroidissement dans les espaces 51 et 54 permettant ainsi de conserver l'embrayage 30 dans un bain de fluide de lubrification et de refroidissement. L'intérêt de cette disposition est d'adapter la quantité de fluide présente dans la région de cet embrayage, notamment à l'énergie calorifique générée par ledit embrayage.

Le fluide de lubrification et de refroidissement est évacué par des passages 60 et 61 ménagés respectivement au niveau des dents 32a et de la paroi radiale de la pièce 36 pour son renouvellement. Le passage 61 est un passage calibré. La butée 39 située entre le plateau 32 et le voile 17a de la première demi-coquille 17 est lubrifiée par le fluide circulant dans le canal longitudinal 50, le perçage transversal 52, les passages axiaux 53 et 55, le perçage transversal 56 et enfin à travers le roulement 23.

En fonctionnement, les disques de l'embrayage sont maintenus dans un tore de fluide formé par centrifugation, nivelé intérieurement par le passage 61 et renouvelé par les fuites calibrées à travers le passage 60. Le maintien de l'embrayage dans ce bain de fluide permet d'assurer de façon optimale le refroidissement et la lubrification des disques de cet embrayage.

Le module de transmission selon l'invention permet de minimiser la consommation d'énergie utilisée pour la commande l'embrayage puisque sur la durée de vie d'un véhicule automobile, l'embrayage est plus souvent en position fermée qu'en position ouverte ou glissante. En effet, en position normalement fermée, aucune pression de fluide et donc aucune énergie n'est nécessaire pour maintenir l'embrayage dans cette position.

Dans le module de transmission selon l'invention, le maintien de l'embrayage en position embrayée est obtenu par l'élément élastique qui agit directement sur le piston dudit embrayage et la commande de cet embrayage en position débrayée est obtenue par la pression du fluide qui agit aussi directement sur ce piston.

L'application de la pression et donc la consommation d'énergie pour l'actionnement du piston de l'embrayage ne s'effectue que pour le glissement et/ou l'ouverture de cet embrayage. La consommation globale d'énergie s'en trouve donc réduite. Le module de transmission selon l'invention permet également un dimensionnement au plus juste de la source de pression hydraulique en terme de puissance et de sévérité de service. II permet aussi d'avoir un bon contrôle de l'ouverture et/ou de la fermeture de l'embrayage du fait de la bijection de la loi effort/déplacement du piston de commande de l'embrayage.

Enfin, l'agencement du module de transmission selon l'invention évite l'incorporation d'une chambre de compensation dans le carter pour compenser la pression du fluide dans la chambre de commande du piston lorsque cette chambre est entraînée en rotation permettant ainsi de réduire l'encombrement axial de ce module.

## Revendications

1. Module de transmission (10) pour un groupe motopropulseur, notamment pour véhicules automobiles, du type comprenant un arbre d'entrée de mouvement (11) destiné à être relié à un moteur thermique (1), un arbre de sortie de mouvement (12) destiné à être relié à une boîte de vitesses (2) et un embrayage (30) de liaison entre les deux arbres (11, 12), **caractérisé en ce qu'**il comprend un carter (16) autonome comportant une première demi-coquille (17) supportant à rotation l'arbre d'entrée (11) et une seconde demi-coquille (18) supportant à rotation l'arbre de sortie (12) coaxial audit arbre d'entrée (11) et **en ce que** les deux demi-coquilles (17, 18) forment un logement (22) étanche contenant l'embrayage (30) naturellement en position embrayée, un organe mécanique (35) de maintien de l'embrayage (30) dans cette position embrayée par l'intermédiaire d'un piston (37) en forme de disque, un circuit hydraulique (40, 41) de commande en position débrayée de cet embrayage (30) en agissant directement sur ledit piston (37) à l'encontre dudit organe mécanique (35) et un circuit hydraulique (50, 52, 53, 55, 56) de lubrification et de refroidissement dudit embrayage.

2. Module selon la revendication 1, **caractérisé en ce que** la première demi-coquille (17) comporte un fourreau central (17b) muni d'un alésage axial (19) de passage de l'arbre d'entrée (11).

3. Module selon la revendication 1, **caractérisé en ce que** la seconde demi-coquille (18) comporte un fourreau central (18b) muni d'un alésage axial (20) de passage de l'arbre de sortie (12).

4. Module selon l'une quelconque des revendications 1 à 3, **caractérisé en ce que** l'embrayage (30) comporte une première série de disques (31) portés par un plateau (32) solidaire de l'arbre d'entrée (11) et une seconde série de disques (33) disposés entre les disques (31) de la première série et portés par un plateau (34) solidaire de l'arbre de sortie (12), lesdits disques (31, 33) étant déplaçables en translation axiale et rappelés les uns vers les autres sous l'action de l'organe mécanique (35) de maintien de l'embrayage en position embrayée.

5. Module selon l'une quelconque des revendications 1 à 4, **caractérisé en ce que** l'organe mécanique de maintien de l'embrayage en position embrayée comprend au moins un élément élastique (35) interposé entre une pièce (36) fixe en translation portée par un manchon (38) concentrique au fourreau (18b) de la seconde demi-coquille (18) et le piston (37) monté coulissant sur ledit manchon (38) et agissant sur ladite première série de disques (33) de l'embrayage (30).

6. Module selon l'une quelconque des revendications 1 à 5, **caractérisé en ce que** le circuit hydraulique de commande comprend un canal longitudinal (40) ménagé dans le fourreau (18b) de la seconde demi-coquille (18) et comportant une entrée (40a) reliée à une alimentation en fluide sous pression et une sortie (40b) débouchant dans une chambre (41) formée par le piston (37) et un disque (42) fixe en translation porté par ledit manchon (38) de l'autre côté dudit piston (37) par rapport à ladite pièce (36), ledit fluide sous pression exerçant une force sur le piston (37) à l'encontre de la force exercée par l'élément élastique (35).

7. Module selon la revendication 5 ou 6, **caractérisé en ce que** ledit élément élastique (35) est formé par exemple par au moins un ressort hélicoïdal ou au moins une rondelle élastique ou un diaphragme.

8. Module selon l'une quelconque des revendications précédentes, **caractérisé en ce que** le circuit hydraulique de lubrification et de refroidissement comprend un canal longitudinal (50) ménagé dans le fourreau (18b) de la seconde demi-coquille (18) et comportant une entrée (50a) reliée à une alimentation en fluide sous pression et une sortie (50b) débouchant dans un espace (51) formé entre le piston (37) et le plateau (34) solidaire de l'arbre de sortie (12).

9. Module selon la revendication 8, **caractérisé en ce que** le canal longitudinal (50) est relié, par un perçage transversal (52), à un passage axial (53) ménagé dans l'arbre de sortie (12) et communiquant, d'une part, avec un espace (54) formé entre les deux plateaux (32, 34) et, d'autre part, avec un passage axial (55) ménagé dans l'arbre d'entrée (11) communiquant, par un perçage transversal (56), avec un espace (57) formé entre les deux demi-coquilles (17, 18), la pièce (36) et le plateau (32) solidaire dudit arbre d'entrée (11).

10. Groupe motopropulseur, notamment pour véhicules automobiles, **caractérisé en ce qu'**il comprend un module de transmission (10) selon l'une quelconque des revendications précédentes.

## Claims

1. Transmission module (10) for an engine-transmission unit, particularly for motor vehicles, of the type comprising a motion input shaft (11) intended to be connected to a combustion engine (1), a motion output shaft (12) intended to be connected to a gearbox (2) and a clutch (30) connecting the two shafts (11, 12), **characterized in that** it comprises a self-contained casing (16) comprising a first half-shell (17) rotationally supporting the input shaft (11) and a second half-shell (18) rotationally supporting the output shaft (12) coaxial with the said input shaft (11), and **in that** the two half-shells (17, 18) form a fluidtight housing (22) containing the clutch (30) naturally in the engaged position, a mechanical member (35) for keeping the clutch (30) in this engaged position by means of a disc-shaped piston (37), a hydraulic circuit (40, 41) for bringing this clutch (30) into the disengaged position by direct action on the said piston (37) against the action of the said mechanical member (35), and a hydraulic circuit (50, 52, 53, 55, 56) for lubricating and cooling the said clutch.

2. Module according to Claim 1, **characterized in that** the first half-shell (17) comprises a central sleeve (17b) provided with an axial bore (19) through which the input shaft (11) passes.

3. Module according to Claim 1, **characterized in that** the second half-shell (18) comprises a central sleeve (18b) provided with an axial bore (20) through which the output shaft (12) passes.

4. Module according to any one of Claims 1 to 3, **characterized in that** the clutch (30) comprises a first series of discs (31) carried by a plate (32) secured to the input shaft (11) and a second series of discs (33) positioned between the discs (31) of the first series and carried by a plate (34) secured to the output shaft (12), the said discs (31, 33) being able to be moved in an axial translational movement and brought back closer to one another under the action of the mechanical member (35) that keeps the clutch in the engaged position.

5. Module according to any one of Claims 1 to 4, **characterized in that** the mechanical member that keeps the clutch in the engaged position comprises at least one resilient element (35) interposed between a translationally fixed part (36) carried by a sleeve tube (38) concentric with the sleeve (18b) of the second half-shell (18) and the piston (37) slideably mounted on the said sleeve tube (38) and acting on the said first series of discs (33) of the clutch (30).

6. Module according to any one of Claims 1 to 5, **characterized in that** the hydraulic control circuit comprises a channel (40) formed in the sleeve (18b) of the second half-shell (18) and comprising an inlet (40a) connected to a pressurized-fluid supply and an outlet (40b) opening into a chamber (41) formed by the piston (37) and a translationally fixed disc (42) carried by the said sleeve tube (38) on the other side of the said piston (37) to the said part (36), the said pressurized fluid applying a force to the piston (37) against the action of the force exerted by the resilient element (35).

7. Module according to Claim 5 or 6, **characterized in that** the said resilient element (35) is formed for example of at least one helical spring or at least one elastic washer or a diaphragm.

8. Module according to any one of the preceding claims, **characterized in that** the hydraulic lubricating and cooling circuit comprising a longitudinal channel (50) formed in the sleeve (18b) of the second half-shell (18) and comprising an inlet (50a) connected to a pressurized-fluid supply and an outlet (50b) opening into a space (51) formed between the piston (37) and the plate (34) secured to the output shaft (12).

9. Module according to Claim 8, **characterized in that** the longitudinal channel (50) is connected, by a transverse drilling (52), to an axial passage (53) formed in the output shaft (12) and communicating, on the one hand, with a space (54) formed between the two plates (32, 34) and, on the other hand, with an axial passage (55) formed in the input shaft (11) communicating, via a transverse drilling (56), with a space (57) formed between the two half-shells (17, 18), the part (36) and the plate (32) secured to the said input shaft (11).

10. Engine-transmission unit, particularly for motor vehicles, **characterized in that** it comprises a transmission module (10) according to any one of the preceding claims.

## Patentansprüche

1. Triebstrangmodul (10) für eine Motor-Getriebeeinheit, insbesondere für Kraftfahrzeuge jener Art, die eine Bewegungseingangswelle (11), die mit einem Verbrennungsmotor (1) verbunden werden soll, eine Bewegungsausgangswelle (12), die mit einem Getriebe (2) verbunden werden soll, und eine Kupplung (30) zur Verbindung zwischen den beiden Wellen (11, 12) umfasst, **dadurch gekennzeichnet, dass** es ein autonomes Gehäuse (16) umfasst, das eine erste Halbschale (17), die die Eingangswelle (11) drehbar stützt, und eine zweite Halbschale (18), die die Ausgangswelle (12) drehbar stützt und koaxial zur Eingangswelle (11) verläuft, enthält und dass die beiden Halbschalen (17, 18) eine dichte Aufnahme (22) bilden, die die natürlicherweise in eingerückter Stellung befindliche Kupplung (30), ein mechanisches Glied (35) zum Halten der Kupplung (30) in dieser eingerückten Stellung mittels eines scheibenförmigen Kolbens (37), einen Hydraulikkreis (40, 41) zur Ansteuerung dieser Kupplung (30) in die ausgerückte Stellung durch direkte Einwirkung auf den Kolben (37) gegen das mechanische Glied (25) und einen Hydraulikkreis (50, 52, 53, 55, 56) zur Schmierung und Abkühlung der Kupplung enthält.

2. Modul nach Anspruch 1, **dadurch gekennzeichnet, dass** die erste Halbschale (17) eine mittlere Hülse (17b) enthält, die mit einer axialen Bohrung (19) zum Hindurchführen der Eingangswelle (11) versehen ist.

3. Modul nach Anspruch 1, **dadurch gekennzeichnet, dass** die zweite Halbschale (18) eine mittlere Hülse (18b) aufweist, die mit einer axialen Bohrung (20) zum Hindurchführen der Ausgangswelle (12) versehen ist.

4. Modul nach einem der Ansprüche 1 bis 3, **dadurch gekennzeichnet, dass** die Kupplung (30) eine erste Reihe von Scheibe (31), die von einer fest mit der Eingangswelle (11) verbundenen Platte (32) getragen werden, und eine zweite Reihe von Scheiben (33), die zwischen den Scheiben (31) der ersten Reihe angeordnet sind und von einer fest mit der Ausgangswelle (12) verbundenen Platte (34) getragen werden, aufweist, wobei die Scheiben (31, 33) axial translatorisch verschiebbar sind und unter Wirkung des mechanischen Glieds (35) zum Halten der Kupplung in eingerückter Stellung zueinander zurückgeholt werden.

5. Modul nach einem der Ansprüche 1 bis 4, **dadurch gekennzeichnet, dass** das mechanische Glied zum Halten der Kupplung in eingerückter Stellung mindestens ein elastisches Element (35), das zwischen einem translationsfesten Teil (36), das von einer zu der Hülse (18b) der zweiten Halbschale (18) konzentrischen Buchse getragen wird, und dem an der Buchse (38) verschiebbar angebrachten Kolben (37), der auf die erste Reihe von Scheiben (33) der Kupplung (30) einwirkt, angeordnet ist.

6. Modul nach einem der Ansprüche 1 bis 5, **dadurch gekennzeichnet, dass** der hydraulische Steuerkreis einen Längskanal (40) aufweist, der in der Hülse (18b) der zweiten Halbschale (18) ausgebildet ist und einen mit einer Druckfluidversorgung verbundenen Eingang (40a) und einen Ausgang (40b) aufweist, der in einer Kammer (41) mündet, die durch den Kolben (37) und eine translationsfeste Scheibe (42) gebildet wird, die von der Buchse (38) auf der anderen Seite des Kolbens (37) bezüglich des Teils (36) getragen wird, wobei das Druckfluid eine Kraft auf den Kolben (37) gegen die von dem elastischen Element (35) ausgeübte Kraft aufweist.

7. Modul nach Anspruch 5 oder 6, **dadurch gekennzeichnet, dass** das elastische Element (35) zum Beispiel durch mindestens eine Schraubenfeder und mindestens eine elastische Unterlegscheibe oder eine Membran gebildet wird.

8. Modul nach einem der vorhergehenden Ansprüche, **dadurch gekennzeichnet, dass** der hydraulische Schmier- und Kühlreis einen Längskanal (50) aufweist, der in der Hülse (18b) der zweiten Halbschale (18b) ausgebildet ist und einen Eingang (50a), der mit einer Druckfluidversorgung verbunden ist, und einen Ausgang (50b), der in einem zwischen dem Kolben (37) und der fest mit der Ausgangswelle (12) verbundenen Platte (34) gebildeten Raum (51) mündet, enthält.

9. Modul nach Anspruch 8, **dadurch gekennzeichnet, dass** der Längskanal durch eine Querbohrung (52) mit einem axialen Durchgang (53) verbunden ist, der in der Ausgangswelle (12) ausgebildet ist und einerseits mit einem zwischen den beiden Platten (32, 34) gebildeten Raum (54) und andererseits mit einem in der Eingangswelle (11) ausgebildeten axialen Durchgang (55) in Verbindung steht, der durch eine Querbohrung (56) mit einem zwischen den beiden Halbschalen (17, 18), dem Teil (36) und der fest mit der Eingangswelle (11) verbundenen Platte (32) gebildeten Raum (57) in Verbindung steht.

10. Motor-Getriebeeinheit, insbesondere für Kraftfahrzeuge, **dadurch gekennzeichnet, dass** sie ein Triebstrangmodul (10) nach einem der vorhergehenden Ansprüche aufweist.
